(19) Europäisches Patentamt
European Patent Office
Office européen des brevets

(11)   EP 2 599 039 B1

(12)   FASCICULE DE BREVET EUROPEEN

(45) Date de publication et mention
de la délivrance du brevet:
**16.05.2018   Bulletin 2018/20**

(21) Numéro de dépôt: **11735427.4**

(22) Date de dépôt: **19.07.2011**

(51) Int Cl.:
**G06N 5/02** *(2006.01)*       **G06N 7/00** *(2006.01)*

(86) Numéro de dépôt international:
**PCT/EP2011/062381**

(87) Numéro de publication internationale:
**WO 2012/013548 (02.02.2012 Gazette 2012/05)**

(54) **PROCEDE ET SYSTEME D'ANALYSE DE DONNEES DE VOL ENREGISTREES AU COURS D'UN VOL D'UN AVION**

VERFAHREN UND SYSTEM ZUR FLUGDATEN ANALYSE

METHOD AND SYSTEM FOR FLIGHT DATA ANLYSIS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.07.2010   FR 1056273**

(43) Date de publication de la demande:
**05.06.2013   Bulletin 2013/23**

(73) Titulaire: **Safran Electronics & Defense
92100 Boulogne-Billancourt (FR)**

(72) Inventeur: **FERRAND, Fabrice
75015 Paris (FR)**

(74) Mandataire: **Le Guen-Maillet
5, place de Newquay
BP 70250
35802 Dinard Cedex (FR)**

(56) Documents cités:
**US-A1- 2006 085 164**

• **Craig A. Knoblock: "Building Software Agents for
Planning, Monitoring and Optimizing Travel", in
Proc. of ENTER 2004 , 31 décembre 2004
(2004-12-31), XP002665383, DOI: 10.1.1.67.6875
Extrait de l'Internet:
URL:http://citeseerx.ist.psu.edu/viewdoc/s
ummary?doi=10.1.1.67.6875 [extrait le
2011-12-08]**
• **LU ZONGLEI ET AL: "A New Method to Alarm
Large Scale of Flights Delay Based on Machine
Learning", KNOWLEDGE ACQUISITION AND
MODELING, 2008. KAM '08. INTERNATIONAL
SYMPOSIUM ON, IEEE, PISCATAWAY, NJ, USA,
21 décembre 2008 (2008-12-21), pages 589-592,
XP031383655, ISBN: 978-0-7695-3488-6**
• **Ning xu et al.: "Bayesian Network analysis of
Flight Delays", Transportation Research Board
86th Annual Meeting , 25 janvier 2007
(2007-01-25), XP002665384, Extrait de l'Internet:
URL:http://catsr.ite.gmu.edu/pubs/XuTRB200
7.pdf [extrait le 2011-12-08]**

**Description**

La présente invention concerne un procédé et un système d'analyse d'un ensemble de données de vol dont les valeurs ont été enregistrées au cours d'un vol d'un avion.

L'une des causes principales des retards des avions est liée à des problèmes techniques survenants sur ces avions de manière impromptue. De plus, les phases de maintenance de ces avions demandant leur immobilisation prolongée sont très souvent restreintes au minimum pour des raisons de rentabilité.

La réglementation en termes de maintenance et de circulation aérienne définit des normes que les compagnies aériennes sont tenues de respecter afin d'assurer à un usager un niveau de sécurité maximum.

Toutefois, il a été observé que ces dernières années, la sécurité des vols stagne. Afin de continuer à augmenter la sécurité des vols malgré l'augmentation continue du trafic aérien et d'optimiser les phases de maintenance, les compagnies aériennes se sont équipées de systèmes d'analyse de données de vol.

Ces systèmes permettent aux compagnies aériennes de comprendre en détail le déroulement d'un vol à partir d'enregistrements réguliers des valeurs de ces données de vol effectués au cours de chaque vol de chacun de leurs avions.

Pour cela, ces systèmes détectent des évènements singuliers survenus au cours du vol. Un expert analyse alors ces évènements qui indiquent qu'un incident technique s'est produit au cours du vol, qu'une pratique ou une condition prévue par une procédure de vol n'a pas été respectée, prévenant ainsi à un stade très amont d'éventuels incidents ou accidents qui pourraient subvenir.

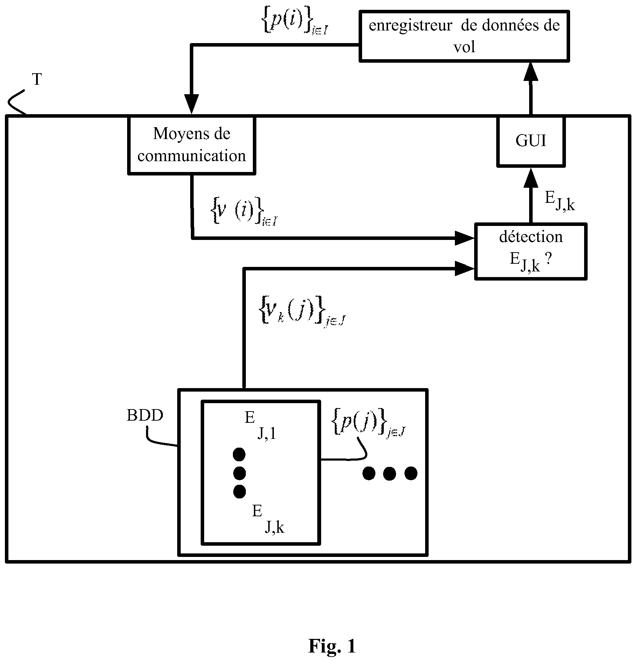

La Fig. 1 représente schématiquement un système connu sous le nom de FDM (Flight Data Monitoring en anglais) qui permet d'analyser un ensemble de données de vol $\{p(i)\}_{i \in I}$ avec $I \subset D$ et $D$ l'ensemble des indices de données de vol, dont des valeurs $\{v(i)\}_{i \in I}$ sont enregistrées au cours d'un vol d'un avion.

Le principe du système consiste à équiper l'avion de moyens d'enregistrement de ces valeurs $\{v(i)\}_{i \in I}$. Ces moyens sont, par exemple, une boîte noire ou encore des enregistreurs spécifiques tels que des ACMS (Aircraft Condition Monitoring System en anglais). Ces données de vol $\{p(i)\}_{i \in I}$ (et donc leurs valeurs) se présentent sous des formes multiples. Par exemple, une valeur d'une donnée de vol peut être une mesure, éventuellement multidimensionnelle, de paramètre de vol (pression d'un fluide, vitesse de l'air, fréquence de vibration ...) ou représenter une occurrence d'une action réalisée par le personnel de bord (activation du pilote automatique etc.).

Lorsque l'avion a terminé son vol ou lorsqu'il est en escale dans un aéroport, les valeurs $\{p(i)\}_{i \in I}$ sont récupérées par une unité de traitement T via des moyens de communication filaire ou sans fil et analysées par un algorithme de forage de données, plus connu sous la dénomination anglaise de *Data Mining*.

Pour cela, un expert détermine et enregistre préalablement dans une base de données BDD, des ensembles de données de vol $\{p(j)\}_{j \in J}$ avec $J \subset D$ et un ensemble d'évènements de vol $E_{J,k}$ relatifs à chaque ensemble de vol $\{p(j)\}_{j \in J}$. Chaque événement de vol $E_{J,k}$ relatif à un ensemble de $J$ données de vol $\{p(j)\}_{j \in J}$ correspond aux valeurs $\{v_k(j)\}_{j \in J}$ de cet ensemble qui ont été enregistrées au cours d'un précédent vol (k désigne par exemple un ordre d'enregistrement dans la base de données des valeurs $\{v_k(i)\}_{j \in J}$) et sous la contrainte que la valeur $v_k(m)$ d'au moins une de ces données de vol $\{p(m)\}_{m \in J}$ dépasse sa valeur nominale $L_m$ qui est également préenregistrée et qui est établie pour respecter la réglementation actuelle en matière de sécurité aérienne et les procédures de vol propres à chaque compagnie aérienne. En termes mathématiques, $E_{J,k} = \{v_k(j)\}_{j \in J} | v_k(j) > L_j \neq \varnothing\}$ ou encore que $E_{J,k}$ est l'ensemble non vide des $\{v_k(j)\}_{j \in J}$ tel que $v_k(j)$ est supérieure au seuil de valeur nominale $L_j$, c'est-à-dire qu'il existe au moins une valeur de données de vol qui n'est pas nominale. Cela sous-entend qu'il existe une relation d'ordre associée à la donnée j qui permette d'écrire $v_k(j) > L_j$. Cette relation peut être différente pour chaque donnée de vol et n'est pas forcément définie par l'opérateur de comparaison de deux entiers.

Une fois que l'expert a déterminé et mémorisé ces différents ensembles de données de vol et les évènements de vol qui leur sont associés, il définit des moyens, habituellement sous forme de programmes d'ordinateurs, pour que ces évènements $E_{J,k}$ soient détectés suite à l'enregistrement au cours d'un vol d'un avion des valeurs $\{v(i)\}_{i \in I}$ d'un ensemble de données de vol $\{p(i)\}_{i \in I}$. Le contexte dans lequel un événement de vol s'est produit peut également être enregistré. Par exemple, le contexte peut être la dénomination du capteur qui a enregistré une donnée de vol, ou encore la localisation de l'avion au moment de cet enregistrement etc.

A l'aide de ces moyens, l'algorithme détecte alors un événement $E_{J,k}$ si il existe au moins une valeur $\{v(i)\}_{i \in I}$ d'une donnée de vol de l'ensemble de données de vol $\{p(i)\}_{i \in I}$ qui dépasse une valeur nominale et que cette donnée de vol corresponde à une valeur $\{v_k(j)\}_{j \in J}$ d'une donnée de vol d'un ensemble de données de vol $\{p(j)\}_{j \in J}$ préalablement enregistré dans la base de données BDD. Il s'agit donc de trouver J et k tel que $I = J$ avec I associé à un événement de vol singulier connu et k une occurrence de $E_{J,k}$ dans l'enregistrement des données effectuées jusqu'à présent.

L'unité de traitement T calcule aussi habituellement des statistiques sur les valeurs des ensembles de données de vol enregistrées au cours de plusieurs vols d'un même avion et/ou sur les différents évènements de vol qui ont été détectés. L'unité de traitement T en déduit alors des tendances concernant l'évolution dans le temps de ces données de vol et/ou d'événements de vol. Ces tendances évaluent si un risque augmente ou diminue. Par exemple, une valeur d'une donnée de vol enregistrée au cours d'un vol peut être également enregistrée lors de vols futurs et à l'issue d'un certain nombre de vols, un diagramme de l'évolution temporelle de cette donnée de vol peut être établi.

Le système comporte également des moyens graphiques GUI pour présenter à un expert ces différents évènements de vol et autres tendances. Ces représentations prennent parfois l'aspect de tableaux dans lesquels sont indiquées les données d'un vol ou de plusieurs vols, les dépassements des valeurs nominales et autres diagrammes temporels représentant les tendances de données de vol et autres évolutions d'évènements de vol.

L'expert analyse alors ces représentations pour valider si les évènements de vol détectés suite à l'analyse des valeurs $\{v(i)\}_{i \in I}$ correspondent bien à un incident de vol pour retracer précisément le déroulement du vol et/ou l'évolution des tendances.

Il en déduit alors des relations entre des évènements de vol qui se sont produits au cours d'un vol ou de plusieurs vols d'un avion et prévoit en conséquence une action à entreprendre pour éviter que ces évènements de vol ne se reproduisent ou qu'un incident majeur m'impose l'immobilisation de l'avion. Il peut par exemple prévoir une éventuelle phase de maintenance de l'avion et/ou une éventuelle modification dans une procédure de vol et/ou une formation spécifique du personnel de bord. A cet effet, les moyens graphiques GUI permettent à l'expert de modifier ou d'entrer manuellement de nouveaux ensembles de données de vol à enregistrer et/ou de nouveaux événements de vol et/ou de nouvelles valeurs nominales.

Les compagnies aériennes ont équipé leurs avions d'une multitude de capteurs de manière à enregistrer un maximum de données de vol, considérant que plus l'expert aura à sa disposition un nombre important de valeurs de données de vol et plus de situations anodines seront enregistrées dans la base de données, c'est-à-dire plus d'événements de vol seront détectés, plus l'expert pourra évaluer précisément les situations en vol qui ont amené à ces évènements et prédire ainsi en amont un plus grand nombre d'incidents majeurs ou d'accidents futurs.

Par ailleurs, la réglementation en matière de sécurité aérienne évolue (conséquences des accidents, efficacité énergétique ou économique, prise en compte de l'augmentation du trafic....) et impose régulièrement de prendre en compte de nouveaux évènements de vol. Ceci se traduit par une évolution à la fois des moyens d'enregistrement en vol et des moyens pour détecter ces nouveaux évènements de vol. De même, une compagnie aérienne peut ajouter ou modifier ses propres évènements de vol dans le but d'améliorer encore la sécurité des vols et d'optimiser ses procédures.

Bien qu'en théorie, la multiplication des enregistrements de données de vol et des ensembles de données de vol à enregistrer permet d'augmenter la précision et la pertinence d'une expertise des situations de vol, en pratique, l'analyse systématique par l'expert de l'ensemble des évènements de vol détectés mobilise des ressources importantes, tant en terme de puissance de calcul nécessaire à l'analyse des valeurs de données de vol par l'unité de traitement T qu'en terme de charge de travail pour l'expert. Généralement, seuls les ensembles de données de vol et autres évènements de vol imposés par la réglementation en matière de sécurité aérienne et les procédures de la compagnie aérienne sont analysés.

Ces experts ne forgent donc leurs évaluations des situations de vol qu'à partir d'un nombre très restreint d'événements de vol qu'ils ont préenregistré dans la base de données BDD et qui ne représente qu'une petite partie des évènements de vol qui pourraient être détectés à partir des valeurs des données de vol enregistrées au cours d'un vol d'un avion. Toutefois, certains de ces évènements de vol « non enregistrés », à l'apparence mineurs aux yeux de l'expert, pourraient permettre la détection de problèmes futurs sous-jacents qui n'apparaissent pas dans leurs rapports d'expertise du fait de leur analyse non systématique de toutes les valeurs de données de vol enregistrées.

L'analyse actuelle d'un ensemble de données de vol enregistrées au cours d'un vol d'un avion permet donc à un expert de mettre en relation des évènements de vol et/ou des tendances pour des conditions de vol identiques (même avion, même plan de vol) alors qu'il serait avantageux que l'expert puisse aussi avoir accès également à l'ensemble des évènements de vol détectables à partir des valeurs de données de vol enregistrées c'est-à-dire, entre autres à des évènements de vol qui se sont produits dans des conditions de vol similaires à celles dans lesquelles un événement de vol enregistré dans la base de données BDD s'est déjà produit.

Un tel système permettrait alors de pouvoir enrichir la base de données BDD de données de vol enregistrées par les différents avions d'une compagnie aérienne, voire de plusieurs compagnies aériennes augmentant ainsi la probabilité qu'un événement de vol se soit déjà produit et donc augmenter sa détectabilité. Un tel système aurait ainsi la possibilité d'enrichir et d'améliorer les détections de nouveaux évènements de vol non prévus par l'expert.

Un tel système d'analyse de données de vol permettrait alors un allègement significatif de la charge de travail de l'expert qui n'aurait plus à recouper les conditions de vol pour déterminer si des conditions de vol sont similaires, et une compagnie aérienne aurait alors une vision des risques encourus par l'ensemble des avions de sa flotte sans que l'expert n'ait une augmentation significative de sa charge de travail.

Un autre inconvénient de l'utilisation des algorithmes de forage de données actuels est que les événements de vol, nouvellement déterminés par un expert, sont enregistrés manuellement par cet expert et ce à l'aide des moyens graphiques GUI. Il serait très avantageux que le système puisse générer automatiquement de nouveaux événements de vol voire de nouveaux ensembles de données de vol suite à sa propre analyse des valeurs de données de vol enregistrées. L'intervention d'un expert ne serait alors requise que pour valider d'éventuels conflits entre les évènements et/ou ensembles de données de vol.

Le problème résolu par la présente invention est de déterminer un système d'analyse de données de vol qui remédie aux inconvénients suscités.

A cet effet, de manière générale, la présente invention concerne un procédé d'analyse d'un ensemble de données de vol, dit premier, dont les valeurs ont été enregistrées au cours d'un vol d'un avion et dans lequel un événement de vol est détecté lorsque les valeurs des données de vol du premier ensemble et les valeurs des données de vol d'un autre ensemble de données de vol, dit deuxième, qui ont été enregistrées au cours d'un précédent vol sont des valeurs relatives aux mêmes données de vol et si les mêmes valeurs des données de vol du premier ensemble et du deuxième ensemble dépassent leurs valeurs nominales respectives.

Selon une caractéristique, au moins un sous-ensemble de données de vol, comportant au moins une des données de vol du premier ensemble et/ou au moins une donnée de vol d'un deuxième ensemble sous la condition qu'au moins une de ses données dépasse sa valeur nominale, est défini par corrélation de la valeur d'au moins une donnée de vol du premier ensemble avec la valeur d'au moins une des données de vol du deuxième ensemble. De plus, un événement de vol est alors susceptible d'être détecté à partir des valeurs des données de vol d'un sous-ensemble et les valeurs des données de vol de l'un des deuxièmes ensembles de données de vol, et si un événement de vol n'est pas détecté à partir d'un sous-ensemble, une probabilité d'appariement entre au moins un deuxième ensemble et ce sous-ensemble est associée à ce sous-ensemble, le premier ensemble est alors mis à jour par adjonction d'au moins une nouvelle donnée de vol d'au moins un deuxième ensemble et/ou par suppression d'au moins une de ses données de vol et ce, selon les valeurs de probabilité d'appariement. Le premier ensemble de données de vol ainsi mis à jour est alors à nouveau enregistré au cours d'un nouveau vol, et le procédé est itéré tant qu'un expert de maintenance ou de sécurité des vols ne peut prendre une décision sur ce sous-ensemble.

Ce procédé permet d'enrichir la connaissance initiale d'une base de données constituée d'un ensemble prédéfini d'événements de vol susceptibles de se produire.

En effet, grâce à la détermination automatique de corrélations entre les valeurs de données de vol préalablement enregistrées et les valeurs de données de vol à analyser, de nouveaux ensembles de données de vol (ou sous-ensembles) sont générés par le procédé ce qui aboutit à la détection éventuelle de nouveaux événements de vol qu'un expert n'avait pas prévu initialement.

Selon une variante, chaque sous-ensemble est présenté à un expert. Si l'expert décide qu'un sous-ensemble est prépondérant, ce sous-ensemble est mémorisé, et s'il décide qu'un sous-ensemble est une fausse alarme, ce sous-ensemble n'est plus considéré.

Cette présentation des sous-ensembles permet à un expert de décider de la pertinence des événements de vol relatifs à ces sous-ensembles et ce afin que ne soient ajoutés dans le système que des événements de vol qui sont pertinents quant à la sécurité des futurs vols ou qui sont relatifs à l'évolution d'une procédure de vol d'une compagnie aérienne.

Selon un mode de réalisation, au moins une nouvelle donnée de vol qui est ajoutée au premier ensemble est issue du deuxième ensemble qui maximise la probabilité d'appariement avec un sous-ensemble.

Ce mode est avantageux car il optimise les chances que l'expert puisse se prononcer sur la pertinence d'un sous-ensemble dès le prochain enregistrement du nouvel ensemble de données de vol ainsi modifié.

Selon un mode de réalisation, les probabilités d'appariement sont enregistrées et mises à jour lors de chaque itération du procédé, et les deuxièmes ensembles, à partir desquels est obtenue ladite au moins une nouvelle donnée de vol pour la mise à jour du premier ensemble, sont sélectionnés à partir de la variation dans le temps de leurs probabilités d'appariement.

Ainsi, l'analyse des valeurs des données de vol du premier ensemble permet d'identifier la variation des ensembles de données de vol enregistrés au cours de plusieurs vols successifs et ce pour prendre en compte les évolutions des conditions de vol mais également les éventuelles modifications des procédures de vol et/ou de la réglementation en matière de sécurité aérienne qui sont introduites par un expert.

Selon une variante, la détection d'événement de vol est également mise à jour lorsque le premier ensemble est mis à jour pour que cette détection puisse détecter un événement de vol relatif audit sous-ensemble.

Cette variante est avantageuse car elle permet que des évènements de vol définis à partir de sous-ensembles soient détectés dans le futur et ce même si ces évènements ne pouvaient l'être jusque-là.

Selon une variante de cette variante, des données de vol simulées sont utilisées pour valider les modifications de la détection d'événement ainsi modifiée.

Ces données de vol permettent de valider le fonctionnement du système une fois la détection d'événements mise à jour, c'est-à-dire, entre autres, de valider que les évènements jusque là détectés le soient encore, que des faux résultats ne se produisent pas par rapport aux valeurs nominales, ou que les valeurs aux limites soient atteintes, etc.

La présente invention concerne également un système d'analyse qui comporte des moyens pour mettre en oeuvre l'un des procédés ci-dessus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 représente schématiquement un système d'analyse d'un ensemble de données de vol dont les valeurs ont été enregistrées au cours d'un vol d'un avion, et

La Fig. 2 représente schématiquement un système d'analyse d'un ensemble de données de vol $\{p(i)\}_{i \in I}$ dont les valeurs ont été enregistrées au cours d'un vol d'un avion selon la présente invention.

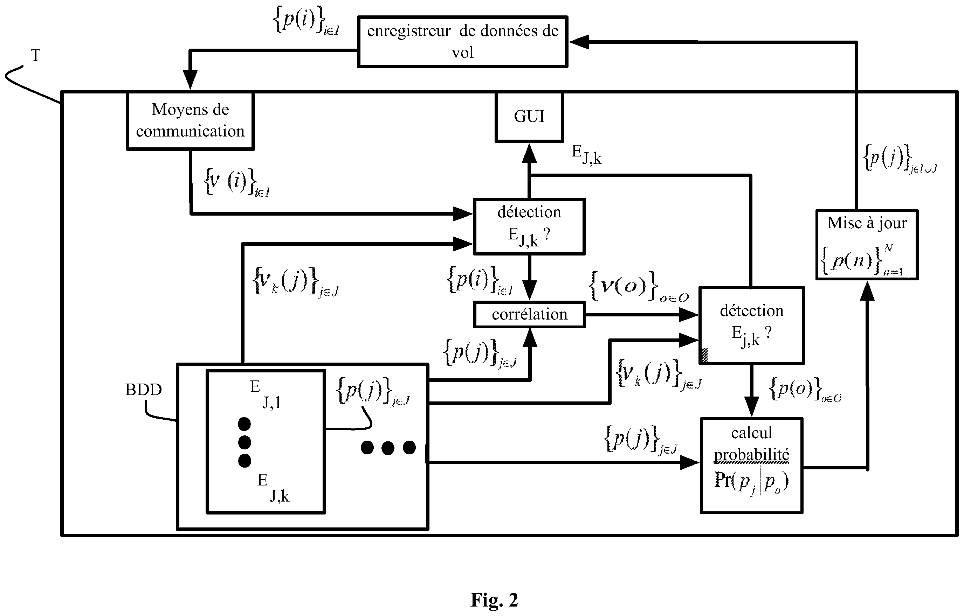

Les références de la Fig. 2 qui sont identiques à celles de la Fig. 1 représentent les mêmes éléments.

Le système d'analyse de la Fig. 2 comporte une unité de traitement T qui regroupe des moyens pour détecter un événement de vol ($E_{J,k}$) lorsque les valeurs des données de vol de l'ensemble $\{p(i)\}_{i \in I}$ et les valeurs $\{v_k(j)\}_{j \in J}$ des données de vol d'un ensemble de données de vol $\{p(j)\}_{j \in J}$, qui ont été enregistrées au cours d'un précédent vol, sont des valeurs relatives aux mêmes données de vol et, si les mêmes valeurs $v_k(m)_{m \in J}$ des données de vol de l'ensemble $\{p(i)\}_{i \in I}$ et de l'ensemble $\{p(j)\}_{j \in J}$ dépassent leurs valeurs nominales respectives.

En pratique, la base de données BDD comporte plusieurs ensembles $\{p(j)\}_{j \in J}$.

L'unité de traitement T comporte également des moyens pour définir au moins un sous-ensemble de données de vol $\{p(o)\}_{o \in O}$ qui comporte au moins une des données de vol de l'ensemble $\{p(i)\}_{i \in I}$ et/ou au moins une donnée de vol d'un ensemble $\{p(j)\}_{j \in J}$ sous la condition qu'au moins une de ses données dépasse sa valeur nominale, par corrélation de la valeur $\{v(i)\}_{i \in I}$ d'au moins une donnée de vol de l'ensemble $\{p(i)\}_{i \in I}$ avec la valeur $\{v_k(j)\}_{j \in J}$ d'au moins une des données de vol de l'ensemble $\{p(j)\}_{j \in J}$.

L'unité de traitement T comporte aussi des moyens pour déterminer et associer à chaque sous-ensemble $\{p(o)\}_{o \in O}$ une probabilité d'appariement $\Pr(p_o|p_j)$ entre au moins un ensemble $\{p(j)\}_{j \in J}$ et ce sous-ensemble $\{p(o)\}_{o \in O}$, et des moyens pour mettre à jour l'ensemble $\{p(i)\}_{i \in I}$ par adjonction d'au moins une nouvelle donnée de vol $\{p(n)\}_{n \in N}$ ($N \subset D$) d'au moins un ensemble $\{p(j)\}_{j \in J}$ et/ou par suppression d'au moins une de ses données de vol $\{p(i)\}_{i \in I}$ et ce, selon les valeurs de probabilité d'appariement $\Pr(p_j|p_o)$.

Les moyens de l'unité de traitement T sont mis en oeuvre, selon un mode de réalisation, sous forme de programmes d'ordinateurs.

Le procédé d'analyse, mis en oeuvre par une telle unité de traitement T, permet d'analyser les valeurs de l'ensemble de données de vol $\{p(i)\}_{i \in I}$ qui n'est pas obligatoirement connu au préalable de la base de données BDD. Ainsi, il permet de minimiser la tâche d'un expert pour mettre en relation de nouveaux évènements de vol issus de cet ensemble de données de vol à analyser avec les évènements de vol $E_{J,k}$ préalablement enregistrés dans la base de données BDD.

Ce procédé est itératif et met en oeuvre une méthode qui peut s'apparenter à une analyse qui est multidimensionnelle et paramétrée par un apprentissage non supervisé.

Tout d'abord, au moins un sous-ensemble de données de vol, comportant au moins une des données de vol de l'ensemble $\{p(i)\}_{i \in I}$ et/ou au moins une donnée de vol d'un ensemble $\{p(j)\}_{j \in I}$ sous la condition qu'au moins une de ses données dépasse sa valeur nominale, est défini par corrélation de la valeur $\{v(i)\}_{i \in I}$ d'au moins une donnée de vol de l'ensemble $\{p(i)\}_{i \in I}$ avec la valeur $\{v_k(j)\}_{j \in J}$ d'au moins une des données de vol d'un ensemble $\{p(j)\}_{j \in J}$.

Les ensembles I et J sont des ensembles quelconques de l'ensemble D de toutes les données de vol et aucune hypothèse de relation entre eux n'existe. Ainsi, l'ensemble I et J peuvent avoir une intersection vide ou non vide, I (respectivement J) peut être inclus dans J (respectivement I).

La définition de la corrélation entre valeurs des données de vol de l'ensemble $\{p(i)\}_{i \in I}$ et valeurs des données de vol de l'ensemble $\{p(i)\}_{j \in J}$ est à la portée de l'homme du métier. Par exemple, un jeu de règles peut être préprogrammé pour que certaines données de vol forment systématiquement un sous-ensemble dès qu'elles sont présentes dans les deux ensembles et d'autres peuvent être écartées dès qu'elles se présentent soit dans un soit dans l'autre ensemble. On peut également établir des règles pour quantifier la corrélation entre les valeurs et former des sous-ensembles uniquement avec les données de vol qui ont des valeurs de corrélation élevées.

Une fois que un voire plusieurs sous-ensembles ont ainsi été formés, un événement de vol $E_{J,k}$ est alors susceptible d'être détecté à partir des valeurs des données de vol $\{v(o)\}_{o \in O}$ d'un sous-ensemble $\{p(o)\}_{o \in O}$ et les valeurs $\{v_k(j)\}_{j \in J}$ des données de vol de l'un des ensembles de données de vol $\{p(j)\}_{j \in J}$. On rappelle qu'un événement $E_{J,k}$ est détecté si $\{v(o)\}_{o \in O}$ et $\{v_k(j)\}_{j \in J}$ d'un ensemble $\{p(j)\}_{j \in J}$ sont des valeurs relatives aux mêmes données de vol (I=J notamment) et si $\{v(o)_{o \in O}$ et $\{v_k(j)\}_{j \in J}$ dépassent leurs valeurs nominales respectives.

Ce cas correspond à la détection d'un événement de vol qui est déjà survenu au cours d'un vol antérieur.

Si, par contre, un événement de vol survenu préalablement n'est pas détecté à partir d'un sous-ensemble, alors une probabilité d'appariement $\Pr(p_o|p_j)$ entre au moins un ensemble $\{p(j)\}_{j \in I}$ et ce sous-ensemble est associée à ce sous-ensemble.

Selon un mode de réalisation, l'estimation de ces probabilités $\Pr(p_o|p_j)$ peut être vue comme un problème direct de classification de chaque sous-ensemble issu de l'ensemble $\{p(i)\}_{i \in I}$. En considérant alors chaque ensemble $\{p(j)\}_{j \in J}$ comme des classes d'événements qui regroupent les évènements de vol qui sont détectés par ces ensembles de données de vol, et que l'ensemble

$\{p(i)\}_{i \in I}$ est constituée d'une pluralité de sous-ensembles indépendants les uns des autres, le problème direct pour classifier les sous-ensembles s'exprime par

$$y = \arg\max \prod_{o=1}^{O} P(p_o \mid p_j)$$

avec y une estimation de la classification de tous les sous-ensembles $p_o$ dans les classes pj.

Il est connu pour résoudre ce problème d'utiliser une méthode de classification dite de Cauchy/Naive/Bayes qui a été largement utilisée dans le domaine de la classification de primitives d'images (Emotion Récognition using a Cauchy Naive Bayes Classifier, IEEE Transactions on Pattern Analysis and Machine Intelligence, 18(6): 636-642, 1996).

Cette méthode est itérative et permet de converger vers une classification des sous-ensembles qui est stable. A ce moment-là, chacune des probabilités $Pr(p_o|p_j)$ est fixée à une valeur qui est élevée lorsque le sous-ensemble et l'ensemble $p_o$ ont un grand nombre de données de vol en commun.

L'ensemble $\{p(i)\}_{i \in I}$ à analyser est alors mis à jour par adjonction d'au moins une nouvelle donnée de vol $\{p(n)\}_{n \in N}$ d'au moins un ensemble $\{p(j)\}_{j \in J}$ et/ou par suppression d'au moins une de ses données de vol $\{p(i)\}_{i \in I}$, et ce selon les valeurs de probabilité d'appariement $Pr(p_j|p_o)$.

Ainsi, comme la probabilité d'appariement quantifie la ressemblance entre l'ensemble $\{p(j)\}_{j \in J}$ et chaque sous-ensemble, les N données de vol $\{p(n)\}_{n \in N}$ de l'ensemble $\{p(j)\}_{j \in J}$ choisies peuvent être ajoutées à l'ensemble $\{p(i)\}_{i \in I}$ ce qui permettra lors de prochains enregistrements de ces valeurs de données de vol $\{p(j)\}_{j \in I \cup J}$ de fournir des indications qui permettent à un expert de prendre sa décision quant à la suite à donner au sous-ensemble.

Dans le cas où plusieurs sous-ensembles seraient formés, à l'issue du calcul des probabilités, les N données de vol $\{p(n)\}_{n \in N}$ ajoutées sont fonction des résultats de l'ensemble des probabilités.

L'ensemble de données de vol ainsi mis à jour $\{p(j)\}_{j \in I \cup J}$ est alors à nouveau enregistré au cours d'un nouveau vol, et le procédé est itéré tant qu'un expert ne peut prendre une décision sur ce sous-ensemble.

L'ajout de nouvelles données de vol est en quelque sorte une programmation dynamique des enregistreurs de vol qui maximise la probabilité de détection de nouveaux évènements mais également la probabilité de détection d'un évènement bien avant qu'un problème ou qu'une défaillance ne survienne pendant le vol d'un avion.

Selon une variante, chaque sous-ensemble est présenté à un expert via les moyens graphiques GUI. L'expert peut alors décider si ce sous-ensemble est un événement de vol prépondérant. Si c'est le cas, ce sous-ensemble est mémorisé dans la base de données BDD et enrichit alors le système de ce nouvel événement de vol. S'il décide qu'un sous-ensemble est une fausse alarme, ce sous-ensemble n'est plus considéré.

Selon un mode de réalisation, au moins une nouvelle donnée de vol $\{p(n)\}_{n \in N}$ qui est ajoutée à l'ensemble $\{p(i)\}_{i \in I}$ est issue de l'ensemble $\{p(j)\}_{j \in J}$ qui maximise la probabilité d'appariement avec un sous-ensemble.

Selon un mode de réalisation, les probabilités d'appariement $Pr(p_j|p_o)$ sont enregistrées et mises à jour lors de chaque itération du procédé, et les ensembles $\{p(j)\}_{j \in J}$, à partir desquels est obtenue ladite au moins une nouvelle donnée de vol $\{p(n)\}_{n \in N}$ pour la mise à jour de l'ensemble $\{p(i)\}_{i \in I}$, sont sélectionnés à partir de la variation dans le temps de leurs probabilités d'appariement.

Selon une variante, la détection d'événement de vol est également mise à jour lorsque l'ensemble $\{p(i)\}_{i \in I}$ est mis à jour pour que les moyens de détection puissent détecter un événement de vol relatif à un sous-ensemble.

Avantageusement, des données de vol simulées sont utilisées pour valider les modifications de la détection d'événement modifiée.

## Revendications

1. Procédé d'analyse, par un dispositif de traitement, d'un premier ensemble de données de vol qui sont relatives au fonctionnement d'un avion lorsqu'il est en vol ($\{p(i)\}_{i \in I}$) et dont des valeurs ($\{v(i)\}_{i \in I}$) ont été enregistrées au cours d'un vol de cet avion, des deuxièmes ensembles de données de vol qui ont été enregistrées au cours de précédents vols d'avion étant stockés dans une base de données et une valeur nominale a été enregistrée préalablement pour chaque donnée de vol, le procédé étant tel qu'un événement de vol ($E_{J,k}$) est détecté si il existe au moins une valeur $\{v(i)\}_{i \in I}$ d'une donnée de vol du premier ensemble de données de vol $\{p(i)\}_{i \in I}$ qui dépasse sa valeur nominale et que cette donnée de vol corresponde à une valeur $\{v_k(j)\}_{j \in J}$ d'une donnée de vol d'un desdits deuxièmes ensembles de données de vol $\{p(j)\}_{j \in J}$ préalablement enregistré, **caractérisé en ce que** ledit procédé comporte les étapes suivantes :

    - une étape de définition d'un sous-ensemble de données de vol ($\{p(o)\}_{o \in O}$) qui comporte au moins une des données de vol du premier ensemble ($\{p(i)\}_{i \in I}$) et au moins une donnée de vol d'un desdits deuxièmes ensembles ($\{p(j)\}_{j \in J}$), dont au moins une valeur dépasse sa valeur nominale, une corrélation de cette ou de ces données de vol dudit premier ensemble ($\{p(i)\}_{i \in I}$) avec cette ou ces données de vol dudit deuxième ensemble ($\{p(j)\}_{j \in J}$) existant,

- une étape de détection d'un événement de vol $(E_{J,k})$ lorsqu'au moins une valeur d'une donnée de vol dudit sous-ensemble de données de vol $(\{p(o)\}_{o \in O})$ dépasse une valeur nominale et lorsque cette donnée de vol correspond à une valeur $\{v_k(j)\}_{j \in J}$ d'une donnée de vol de l'un desdits deuxièmes ensembles de données de vol $\{p(j)\}_{j \in J}$ préalablement enregistrés, et

- si aucun événement de vol n'a été détecté à l'étape précédente, sont mises en oeuvre les étapes suivantes :

- une étape d'association audit sous-ensemble de données de vol $(\{p(o)\}_{o \in O})$ une valeur de probabilité d'appariement $(Pr(p_o|p_j))$ entre au moins un desdits deuxièmes ensembles de données de vol $(\{p(j)\}_{j \in J})$ et ledit sous-ensemble de données de vol $(\{p(o)\}_{o \in O})$,

- une étape de mise à jour dudit premier ensemble de données de vol $(\{p(i)\}_{i \in I})$ selon la valeur de probabilité d'appariement associé audit sous-ensemble de données de vol, ladite étape de mise à jour comprenant :

- une étape d'ajout au moins une nouvelle donnée de vol $(\{p(n)\}_{n \in N})$ d'au moins un desdits deuxièmes ensembles de données de vol $\{p(j)\}_{j \in J}$ au premier ensemble de données de vol et/ou
- une étape de suppression au moins une des données de vol du premier ensemble de données de vol $(\{p(i)\}_{i \in I}$ ;

- une étape de présentation dudit sous-ensemble via une interface graphique.

2. Procédé selon la revendication 1, dans lequel ledit sous-ensemble est présenté à un expert via une interface graphique, afin de permettre à l'expert de décider si ledit sous-ensemble est prépondérant et doit être mémorisé par le dispositif de traitement, ou s'il correspond à une fausse alarme et ne doit plus être considéré.

3. Procédé selon la revendication 1 ou 2, dans lequel au moins une nouvelle donnée de vol $(\{p(n)\}_{n \in N})$ qui est ajoutée au premier ensemble de données de vol $\{p(i)\}_{i \in I}$ est issue de l'ensemble, parmi lesdits deuxièmes ensembles de données de vol $(\{p(j)\}_{j \in J})$, qui maximise la probabilité d'appariement avec ledit sous-ensemble $(\{p(o)\}_{o \in O})$.

4. Procédé selon l'une des revendications 1 à 3, dans lequel la valeur de probabilité d'appariement est enregistrée et mise à jour lors de chaque itération du procédé, et les deuxièmes ensembles de données de vol $(\{p(j)\}_{j \in J})$, à partir desquels est obtenue ladite au moins une nouvelle donnée de vol $(\{p(n)\}_{n \in N})$

pour la mise à jour du premier ensemble de données de vol $(\{p(i)\}_{i \in I})$, sont sélectionnés à partir de la variation dans le temps de cette probabilité d'appariement.

5. Procédé selon l'une des revendications 1 à 4, dans lequel la détection d'événement de vol est mise à jour lorsque le premier ensemble de données de vol est mis à jour pour que cette détection puisse détecter un événement de vol relatif audit sous-ensemble de données de vol.

6. Procédé selon la revendication 5, dans lequel des données de vol simulées sont utilisées pour valider la mise à jour de la détection d'événement.

7. Système d'analyse d'un premier ensemble de données de vol qui sont relatives au fonctionnement d'un avion lorsqu'il est en vol $(\{p(i)\}_{i \in I})$ et dont des valeurs $(\{v(i)\}_{i \in I})$ ont été enregistrées au cours d'un vol de cet avion, ledit système comportant une base de données (BDD) dans laquelle sont stockés des deuxièmes ensembles de données de vol $(\{p(i)\}_{j \in J})$ enregistrés au cours de précédents vols d'avion, des moyens pour mémoriser une valeur nominale pour chaque donnée de vol, et des moyens pour qu'un événement de vol $(E_{J,k})$ si il existe au moins une valeur $\{v(i)\}_{i \in I}$ d'une donnée de vol du premier ensemble de données de vol $\{p(i)\}_{i \in I}$ qui dépasse sa valeur nominale et que cette donnée de vol corresponde à une valeur $\{v_k(j)\}_{j \in J}$ d'une donnée de vol d'un desdits deuxièmes ensembles de données de vol $\{p(j)\}_{j \in J}$ préalablement enregistré, **caractérisé en ce qu'**il comporte également :

- des moyens pour définir un sous-ensemble de données de vol $(\{p(o)\}_{o \in O})$ de sorte qu'il comporte au moins une des données de vol du premier ensemble de données de vol $(\{p(i)\}_{i \in I})$ et au moins une donnée de vol d'un desdits deuxièmes ensembles de données de vol $(\{p(j)\}_{j \in J})$, dont au moins une dépasse sa valeur nominale, et de sorte qu'il existe une corrélation de la valeur $(\{v(i)\}_{i \in I})$ de cette ou de ces données de vol dudit premier ensemble $(\{p(i)\}_{i \in I})$ avec la valeur $(\{p(j)\}_{j \in J})$ de cette ou de ces des données de vol dudit deuxième ensemble $(\{p(j)\}_{j \in J})$, et
- des moyens pour déterminer et associer audit sous-ensemble de données de vol $(\{p(o)\}_{o \in O})$, une valeur de probabilité d'appariement $(Pr(p_o|p_j))$ entre au moins un desdits deuxièmes ensembles de données de vol $(\{p(j)\}_{j \in J})$ et ce sous-ensemble de données de vol $(\{p(o)\}_{o \in O})$, et
- des moyens pour mettre à jour le premier ensemble de données de vol $(\{p(i)\}_{i \in I}$ selon la valeur de probabilité d'appariement associé audit sous-ensemble de données de vol, ladite mise à jour consistant à ajouter au moins une nouvelle donnée de vol ($\{p(n)\}_{n \in N}$) d'au moins un desdits deuxièmes ensembles de données de vol ($\{p(j)\}_{j \in J}$) au premier ensemble de données de vol et/ou à supprimer au moins une des données de vol du premier ensemble de données de vol ($\{p(i)\}_{i \in I}$

- des moyens pour présenter ledit sous-sensemble via une interface graphique.

**Patentansprüche**

1. Verfahren zur Analyse durch eine Verarbeitungsvorrichtung eines ersten Satzes von Flugdaten, die sich auf den Betrieb eines Flugzeugs beziehen, wenn es sich im Flug ($\{p(i)\}_{i \in I}$) befindet, und deren Werte ($\{v(i)\}_{i \in I}$) im Laufe eines Fluges dieses Flugzeugs aufgezeichnet worden sind, wobei zweite Sätze von Flugdaten, die bei vorhergehenden Flugzeugflügen aufgezeichnet worden sind, in einer Datenbank gespeichert werden und ein Nennwert ist zuvor für jedes Flugdatum aufgezeichnet worden, wobei das Verfahren derart ist, dass ein Flugereignis ($E_{J,k}$) erfasst wird, wenn mindestens ein Wert $\{v(i)\}_{i \in I}$ eines Flugdatums des ersten Satzes von Flugdaten $\{p(i)\}_{i \in I}$ vorhanden ist, der seinen Nennwert überschreitet, und dass dieses Flugdatum einem Wert $\{v_k(j)\}_{j \in J}$ eines Flugdatums von einem der zweiten Sätze von Flugdaten $\{p(j)\}_{j \in J}$ entspricht, der zuvor aufgezeichnet wird,

**dadurch gekennzeichnet, dass** das Verfahren die folgenden Schritte aufweist:

- einen Schritt des Definierens eines Teilsatzes von Flugdaten ($\{p(o)\}_{o \in O}$), der mindestens eines der Flugdaten des ersten Satzes ($\{p(i)\}_{i \in I}$) und mindestens ein Flugdatum einer der zweiten Sätze ($\{p(j)\}_{j \in J}$) aufweist, wovon mindestens ein Wert seinen Nennwert überschreitet, wobei eine Korrelation von diesem Flugdatum oder diesen Flugdaten des ersten Satzes ($\{p(i)\}_{i \in I}$) mit diesem Flugdatum oder diesen Flugdaten des zweiten Satzes ($\{p(i)\}_{i \in I}$) besteht,
- einen Schritt des Erfassens eines Flugereignisses ($E_{J,k}$), wenn mindestens ein Wert eines Flugdatums des Teilsatzes von Flugdaten ($\{p(o)\}_{o \in O}$) einen Nennwert überschreitet und wenn dieses Flugdatum einem Wert $\{v_k(j)\}_{j \in J}$ eines Flugdatums von einem der zweiten Sätze von Flugdaten $\{p(j)\}_{j \in J}$ entspricht, die zuvor aufgezeichnet werden, und
- wenn kein Flugereignis in dem vorhergehenden Schritt erfasst worden ist, werden die folgenden Schritte umgesetzt:

- einen Schritt des Zuordnens zu dem Teilsatz von Flugdaten $\{p(o)\}_{o \in O}$) eines Wahrscheinlichkeitswertes des Abgleichens ($Pr(p_o|p_j)$) zwischen mindestens einem der zweiten Sätze von Flugdaten ($\{p(j)\}_{j \in J}$) und dem Teilsatz von Flugdaten ($\{p(o)\}_{o \in O}$),
- einen Schritt des Aktualisierens des ersten Satzes von Flugdaten ($\{p(j)\}_{j \in J}$) nach dem Wahrscheinlichkeitswert des Abgleichens, der dem Teilsatz von Flugdaten zugeordnet wird, wobei der Schritt des Aktualisierens aufweist:

- einen Schritt des Hinzufügens von mindestens einem neuen Flugdatum ($\{p(n)\}_{n \in N}$) von mindestens einem der zweiten Sätze von Flugdaten ($\{p(j)\}_{j \in J}$) zu dem ersten Satz von Flugdaten und/oder
- einen Schritt des Löschens von mindestens einem der Flugdaten des ersten Satzes von Flugdaten ($\{p(i)\}_{i \in I}$);

- einen Schritt des Darstellens des Teilsatzes über eine graphische Schnittstelle.

2. Verfahren nach Anspruch 1, wobei der Teilsatz über eine graphische Schnittstelle einem Fachmann vorgestellt wird, um dem Fachmann zu ermöglichen, zu entscheiden, ob der Teilsatz entscheidend ist und von der Verarbeitungsvorrichtung gespeichert werden muss oder ob er einem Fehlalarm entspricht und nicht mehr berücksichtigt werden muss.

3. Verfahren nach Anspruch 1 oder 2, wobei mindestens ein neues Flugdatum ($\{p(n)\}_{n \in N}$), das zu dem ersten Satz von Flugdaten ($\{p(i)\}_{i \in I}$) hinzugefügt wird, aus dem Satz unter den zweiten Sätzen von Flugdaten ($\{p(j)\}_{j \in J}$) hervorgegangen ist, der die Wahrscheinlichkeit des Abstimmens mit dem zweiten Teilsatz ($\{p(o)\}_{o \in O}$) maximiert.

4. Verfahren nach einem der Ansprüche 1 bis 3, wobei die Wahrscheinlichkeit des Abstimmens bei jeder Iteration des Verfahrens aufgezeichnet und aktualisiert wird und die zweiten Sätze von Flugdaten ($\{p(j)\}_{j \in J}$), ausgehend von denen das mindestens eine neue Flugdatum $\{p(n)\}_{n \in N}$ für das Aktualisieren des ersten Satzes von Flugdaten ($\{p(i)\}_{i \in I}$) erhalten wird, ausgehend von der zeitlichen Änderung dieser Wahrscheinlichkeit des Abstimmens ausgewählt werden.

5. Verfahren nach einem der Ansprüche 1 bis 4, wobei das Erfassen eines Flugereignisses aktualisiert wird, wenn der ersten Satz von Flugdaten aktualisiert wird, damit dieses Erfassen ein Flugereignis erfassen kann, das sich auf den Teilsatz von Flugdaten bezieht.

6. Verfahren nach Anspruch 5, wobei simulierte Flugdaten verwendet werden, um das Aktualisieren des Erfassens eines Flugereignisses zu bestätigen.

**7.** System zur Analyse eines ersten Satzes von Flugdaten, die sich auf den Betrieb eines Flugzeugs beziehen, wenn es sich im Flug ($\{p(i)\}_{i \in I}$) befindet, und wovon Werte ($\{v(i)\}_{i \in I}$) im Laufe eines Fluges dieses Flugzeugs aufgezeichnet worden sind, wobei das System eine Datenbank (BDD), in der zweite Sätze von Flugdaten ($\{p(j)\}_{j \in J}$) gespeichert sind, die bei vorhergehenden Flugzeugflügen aufgezeichnet worden sind, Mittel zum Speichern eines Nennwerts für jedes Flugdatum und Mittel aufweist, damit ein Flugereignis ($E_{J,k}$) , wenn mindestens ein Wert $\{v(i)\}_{i \in I}$ eines Flugdatums des ersten Satzes von Flugdaten $\{p(i)\}_{i \in I}$ vorhanden ist, der seinen Nennwert überschreitet und dass dieses Flugdatum einem Wert $\{v_k(j)\}_{j \in J}$ eines Flugdatums von einem der zweiten Sätze von Flugdaten $\{p(j)\}_{j \in J}$ entspricht, der zuvor aufgezeichnet ist, **dadurch gekennzeichnet ist, dass** es Folgendes aufweist:

- Mittel zum Definieren eines Teilsatzes von Flugdaten ($\{p(o)\}_{o \in O}$) derart, dass er mindestens eines der Flugdaten des ersten Satzes von Flugdaten ($\{p(i)\}_{i \in I}$) und mindestens ein Flugdatum einer der zweiten Sätze von Flugdaten ($\{p(j)\}_{j \in J}$) aufweist, wovon mindestens eines seinen Nennwert überschreitet, und derart, dass eine Korrelation von dem Wert ($\{v(i)\}_{i \in I}$) von diesem Flugdatum oder diesen Flugdaten des ersten Satzes ($\{p(i)\}_{i \in I}$)mit dem Wert $\{v_k(j)\}_{j \in J}$ von diesem Flugdatum oder diesen Flugdaten des zweiten Satzes ($\{p(j)\}_{j \in J}$) besteht, und
- Mittel zum Bestimmen und Zuordnen zu dem Teilsatz von Flugdaten ($\{p(o)\}_{o \in O}$) eines Wahrscheinlichkeitswertes des Abgleichens ($\mathrm{Pr}(p_o|p_j)$) zwischen mindestens einem der zweiten Sätze von Flugdaten ($\{p(j)\}_{j \in J}$) und diesem Teilsatz von Flugdaten ($\{p(o)\}_{o \in O}$), und
- Mittel zum Aktualisierens des ersten Satzes von Flugdaten ($\{p(i)\}_{i \in I}$) nach dem Wahrscheinlichkeitswert des Abgleichens, der dem Teilsatz von Flugdaten zugeordnet wird, wobei das Aktualisieren darin besteht, mindestens ein neues Flugdatum ($\{p(n)\}_{n \in N}$) von mindestens einem der zweiten Sätze von Flugdaten ($\{p(j)\}_{j \in J}$) zu dem ersten Satz von Flugdaten hinzuzufügen und/oder mindestens eines der Flugdaten des ersten Satzes von Flugdaten ($\{p(i)\}_{i \in I}$) zu löschen,
- Mittel zum Darstellen des Teilsatzes über eine graphische Schnittstelle.

**Claims**

**1.** Method for the analysis, by a processing device, of a first set of flight data that are related to the functioning of an aircraft when it is on flight ($\{p(i)\}_{i \in I}$) the values ($\{v(i)\}_{i \in I}$) of which were recorded during a flight, second sets of flight data that were recorded during previous flights being stored in a database and one nominal value was recorded beforehand for each flight data flights , the method being such that a flight event ($E_{J,k}$) is detected if there is at least one value $\{v(i)_{i \in I}$ of one flight data of the first set of flight data exceed its nominal value and that this flight data corresponds to a value $\{v_k(j)_{j \in J}$ of one flight data of one of said second sets of flight data $\{p(j)\}_{j \in J}$ beforehand stored,

**characterised in that** said method comprises the following steps:

- a step of defining a subset of flight data ($\{p(o)\}_{o \in O}$) that comprises at least one of the flight data of the first set ($\{p(i)\}_{i \in I}$) and at least one flight data item of one of said second sets ($\{p(j)\}_{j \in J}$), at least one of which exceeds its nominal value, at least one value of which exceeds its nominal value a correlation of this or these flight data ($\{v(i)_{i \in I}$) of this or these flight data of said first set ($\{p(i)\}_{i \in I}$) with the value ($\{v_k(j)\}_{j \in J}$) of this or these flight data of said second set ($\{p(j)\}_{j \in J}$) existing,
- step of detecting an event of flight ($E_{J,k}$) when at least one value of one flight data of said subset of flight data ($\{p(o)\}_{o \in O}$) exceeds a nominal value and when this flight data corresponds to one value $\{v_k(j)\}_{j \in J}$ of one flight data of one of said second sets of flight data $\{p(j)\}_{j \in J}$ beforehand stored, and
- if no flight event is not detected at previous step, the following steps are performed,
- a step of associating to said subset of flight data $\{p(o)\}_{o \in O}$ a probability value of pairing ($\mathrm{Pr}(p_o|p_j)$) between at least one of said second sets of flight data ($\{p(j)\}_{j \in J}$) and said subset of flight data ($\{p(o)\}_{o \in O}$)
- a step of updating of said first set of flight data ($\{p(i)\}_{i \in I}$) according to the probability value of pairing associated to said subset of flight data, said step of of updating comprising:
- a step of adding at least one new flight data item ($\{p(n)\}_{n \in N}$) of at least one of said second sets of flight data ($\{p(j)\}_{j \in J}$) to the first set of flight data and/or
- a step of deleting at least one of the flight data ($\{p(i)\}_{i \in I}$) of the first set of flight data ($\{p(i)\}_{i \in I}$);
- a step of presenting said subset via a graphical interface.

**2.** Method according to claim 1, in which said subset is presented to an expert via a graphical interface to enable the expert to decide whether said subset is preponderant and must be stored by the processing device or whether it corresponds to a false alarm and must not be considered further.

3. Method according to claim 1 or 2, in which at least one new flight data item ($\{p(n)\}_{n \in N}$) that is added to the first set of flight data ($\{p(i)\}_{i \in I}$) comes from the set among said second sets of flight data ($\{p(j)\}_{j \in J}$) that maximises the pairing probability with said subset ($\{p(o)\}_{o \in O}$).

4. Method according to one of claims 1 to 3, in which the pairing probability value or values ($\Pr(p_j | p_o)$) are recorded and updated at each iteration of the method, and the second sets of flight data ($\{p(j)\}_{j \in J}$), from which said at least one new flight data item ($\{p(n)\}_{n \in N}$) is obtained for updating the first set of flight data ($\{p(i)\}_{i \in I}$), are selected using the variation over time of their pairing probabilities.

5. Method according to one of claims 1 to 4, in which the flight event detection is updated when the first set of flight data is updated so that this detection can detect a flight event relating to said subset of flight data.

6. Method according to claim 5, in which the simulated flight data are used to validate the updating of the event detection.

7. System for the analysis, by a processing device, of a first set of flight data that are related to the functioning of an aircraft when it is on flight ($\{p(i)\}_{i \in I}$) the values ($\{v(i)\}_{i \in I}$) of which were recorded during a flight, said system comprising a database (BDD) in which second sets of flight data ($\{p(j)\}_{j \in J}$) recorded during the previous flights are stored, means for memorizing a nominal value for each flight data, and means for detecting a flight event ($E_{J,k}$) if there is at least one value $\{v(i)\}_{i \in I}$ of one flight data of the first set of flight data exceed its nominal value and that this flight data corresponds to a value $\{v_k(j)\}_{j \in J}$ of one flight data of one of said second sets of flight data $\{p(j)\}_{j \in J}$ beforehand stored
**characterised in that** it also comprises:

- means for defining a subset of flight data ($\{p(o)\}_{o \in O}$), so that it comprises at least one of the flight data of the first set of flight data ($\{p(i)\}_{i \in I}$) and at least one flight data item of one of said second sets of flight data ($\{p(j)\}_{j \in J}$), at least one of which exceeds its nominal value, and so that there exists a correlation of the value ($\{v(i)\}_{i \in I}$) of this or these flight data of said first set ($\{p(i)\}_{i \in I}$) with the value ($\{v_k(j)\}_{j \in J}$) of this or these flight data of said second set ($\{p(j)\}_{j \in J}$), and

- means for determining, and associating with said subset of flight data ($\{p(o)\}_{o \in O}$), a probability value of pairing ($\Pr(p_o | p_j)$) between at least one of said second sets of flight data ($\{p(j)\}_{j \in J}$) and this subset of flight data ($\{p(o)\}_{o \in O}$), and
- means for updating the first set of flight data ($\{p(i)\}_{i \in I}$) according to the probability value of pairing associated to said subset of flight data, said updating consisting of adding at least one new flight data item ($\{p(n)\}_{n \in N}$) of at least one of said second sets of flight data ($\{p(j)\}_{j \in J}$) to the first set of flight data and/or deleting at least one of the flight data ($\{p(i)\}_{i \in I}$) of the first set of flight data ($\{p(i)\}_{i \in I}$);
- means for presenting said subset via a graphical interface.

**Fig. 1**

EP 2 599 039 B1

$\{p(i)\}_{i \in I}$    enregistreur de données de vol

T

Moyens de communication     GUI     $E_{J,k}$

$\{v(i)\}_{i \in I}$

$\{p(j)\}_{j \in I \cup J}$

détection $E_{J,k}$ ?

Mise à jour $\{p(n)\}_{n=1}^{N}$

$\{v_k(j)\}_{j \in J}$     $\{p(i)\}_{i \in I}$     $\{v(o)\}_{o \in O}$     détection $E_{j,k}$ ?

corrélation

$\{p(j)\}_{j \in J}$

$\{v_k(j)\}_{j \in J}$     $\{p(o)\}_{o \in O}$

BDD

$E_{J,1}$

$\{p(j)\}_{j \in J}$

$E_{J,k}$

$\{p(j)\}_{j \in J}$     calcul probabilité $\mathrm{Pr}(p_j | p_o)$

**Fig. 2**

12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Emotion Récognition using a Cauchy Naive Bayes Classifier. *IEEE Transactions on Pattern Analysis and Machine Intelligence,* 1996, vol. 18 (6), 636-642